(19) Europäisches Patentamt
European Patent Office
Office européen des brevets

(11) **EP 1 146 116 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(51) Int Cl.⁷: **C12H 1/18**

(21) Anmeldenummer: **00111614.4**

(22) Anmeldetag: **31.05.2000**

(54) **Verfahren zur Pasteurisation von Getränken, insbesondere Bier**

Pasteurisation process for beverages, in particular beer

Procédé de pasteurisation de boissons, en particulier de la bière

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **15.04.2000 DE 10018741**

(43) Veröffentlichungstag der Anmeldung:
**17.10.2001 Patentblatt 2001/42**

(73) Patentinhaber: **Warsteiner Brauerei Haus Cramer KG**
**59581 Warstein (DE)**

(72) Erfinder: **Land, Peter**
**59602 Rüthen-Meiste (DE)**

(74) Vertreter: **Fritz, Edmund Lothar, Dipl.-Chem. et al**
**Patentanwaltskanzlei Fritz**
**Ostentor 9**
**59757 Arnsberg-Herdringen (DE)**

(56) Entgegenhaltungen:
EP-A- 1 106 083         AT-B- 359 019
DE-A- 3 149 769         DE-A- 19 738 926
DE-C- 509 597           FR-A- 734 878
FR-A- 862 998           GB-A- 2 091 079

## Beschreibung

Die vorliegende Erfindung betrifft ein Verfahren zur Pasteurisation von Getränken, insbesondere von Bier nach dem Oberbegriff des Pätentanspruchs 1. Ziel der Pasteurisation ist die Einstellung einer biologischen Stabilität durch die möglichst weitgehende Abtötung der eventuell im Bier enthaltenen Mikroorganismen ohne die Qualität des Produktes negativ zu beeinflussen.

Die heute üblichen Verfahren der Pasteurisation beziehen sich alle auf die von Louis Pasteur entdeckten Erkenntnisse, daß sich die Haltbarkeit von Lebensmittel durch die Erhitzung auf Temperaturen oberhalb von ca. 60°C verlängern läßt.

In der Praxis unterteilen sich die Verfahren im wesentlichen in zwei Prinzipien:

- Pasteurisation des Produktes in den abgefüllten Getränkebehältnissen.
- Pasteurisation des Produktes im Durchfluß (Kurz-Zeit-Erhitzung; KZE).

Die in der Praxis gebräuchlichen Temperaturen für die Pasteurisation von Getränken, z.B. Bier in Getränkebehältnissen liegen bei ca. 65°C bis 68°C im anderen Fall üblicherweise nicht über 72°C. Die Hintergründe und die Verfahren sind in der Fachliteratur hinreichend bekannt und umfassend beschrieben.

## Definition der Pasteurisierungseinheiten (PE)

Die abtötende Wirkung auf die Mikroorganismen durch eine Erhitzung wird durch zwei Parameter bestimmt, die spezifisch für jeden Mikroorganismus gemessen werden müssen:

D-Wert (dezimale Reduktionszeit) $D_{\vartheta H}$

Der D-Wert gibt an, wie lange die Einwirkzeit bei der im Index stehenden Heißhaltetemperätur sein muß, um die lebenden Mikroorganismen um 90% (eine Zehnerpotenz) zu reduzieren.

z-Wert z

Der z-Wert sagt aus, um wieviel °C die im Index des D-Wertes angegebene Heißhaltetemperatur erhöht oder erniedrigt werden muß, um den D-Wert zu zehnteln oder zu verzehnfachen.

Die mathematische Beziehung, in der die Parameter Einfluß finden lautet:

$$D_{\vartheta 2} = D_{\vartheta 1} * 10^{\left(\frac{(\vartheta 1 - \vartheta 2)}{z}\right)}$$

Für die Parameter

$D_{\vartheta 1} = t_h$ (Heißhaltezeit)
$\vartheta 1 = \vartheta h$
$\vartheta 2 = 60°C$
$z = 6,95°C$

sowie Umformen, geht die obengenannte Beziehung in die allseits in der Fachliteratur herangezogene Zahlenwertgleichung

$$PE = t_h * 1,393^{(\vartheta h - 60°C)}$$

über. Hierbei ist 1 PE definiert als der Abtötungsgrad bei einer Heißhaltung von 1 Minute bei 60°C. Dies gilt jedoch genaugenommen nur bei Mikroorganismen, die darüber hinaus auch einem z-Wert von 6,95 entsprechen, was in der Zahlenwertgleichung leider untergeht.

Der z-Wert kann bei anderen Bakteriengattungen einen anderen Wert annehmen, so daß sich dann auch ein anderer für den D-Wert (Heißhaltezeit) ergibt. Außerdem muß die Pasteurisierungstemperatur, die für die Berechnung herangezogen wird, nicht unbedingt 60°C betragen, sondern kann auch anders gewählt werden.

Durch das Einsetzen der Heißhaltetemperatur ($\vartheta$h) und der Heißhaltezeit ($t_h$) als konstante Größen, werden die PE-Werte ermittelt, mit denen das Produkt behandelt wird.

**Vorhandene Verfahren (thermisch-stationär)**

Die Pasteurisationsanlagen, welche im Durchfluß arbeiten und in dem erfindungsgemäßen Verfahren relevant sind, werden in der Praxis üblicherweise als Kurz-Zeit-Erhitzungsanlagen (KZE-Anlagen) bezeichnet.

Diese KZE-Anlagen arbeiten wie folgt:

Das Produkt fließt mit der Einlauftemperatur in den Rekuperator und erwärmt sich durch Wärmeübertragung aus dem abfließenden Produktstrom. Im Anschluß an den Rekuperator wird das Produkt durch eine Pumpe auf ein höheres Druckniveau gebracht, welches verhindert, daß nicht pasteurisiertes Produkt bei Undichtigkeiten im Rekuperator in den pasteurisierten Produktstrom gelangen kann. Anschließend fließt das Produkt durch den Erhitzer, in welchem es durch einen Heizwasserkreislauf auf Heißhaltetemperatur gebracht wird. Nach der Aufheizung auf die Heißhaltetemperatur fließt das Produkt in den Heißhalter, der in den meisten Fällen als einfache in Schleifen verlegte Rohrleitung ausgeführt ist. Einige wenige Hersteller bilden den Heißhalter als Plattenpaket ohne Wärmeübertragungsfunktion aus. Wesentlich hierbei ist die durch das Volumen des Heißhalters und des Volumenstromes vorgegebene Heißhaltezeit, die das Produkt im Heißhalter während der Durchströmung erfährt. Zu beachten ist, daß hierbei für die Berechnung des PE-Wertes die konstante Temperatur im Heißhalter relevant ist (thermisch stationär). Im weiteren Verlauf fließt das Produkt vom Heißhalter in den Rekuperator, wo es die Wärme an das zuströmende Produkt abgibt. Je nach erwünschter Ablauftemperatur kann eine Nachkühlsektion angeschlossen werden, wenn die Ablauftemperatur, die der Rekuperator erreicht, nicht tief genug ist.

Aus der DE 43 38 334 C1 ist ein Verfahren zur Pasteurisation von Bier durch thermische Behandlung bekannt geworden. Bei diesem bekannten Verfahren wird zunächst das zuströmende Bier in einem Rekuperator erhitzt und danach in einem Erhitzer auf die notwendige Pasteurisierungstemperatur erwärmt. Nach dem Austritt aus dem Erhitzer gelangt das auf Pasteurisierungstemperatur erwärmte Bier in einen Heißhalter und wird dort eine bestimmte Zeit lang auf der Pasteurisierungstemperatur gehalten. Erst danach erfolgt in einem weiteren Verfahrensschritt eine Abkühlung des Biervolumenstroms. Damit entspricht das Verfahren dem vorbekannten thermisch stationären Verfahren.

Aus der EP 1 106 083 A1, die nach Artikel 54(3) EPÜ zum Stand der Technik zählt, ist beispielsweise ein Verfahren der eingangs genannten Art zur Pasteurisierung von Getränken bekannt geworden, bei dem unmittelbar nach der Aufheizphase die Abkühlphase eingeleitet wird. Bei diesem Verfahren geht es vorwiegend darum, eine Über- oder Unterpasteurisation bei Prozessschritten wie dem Anlagenstopp, dem Anlagenanlauf oder dem Anlagenwiederanlauf zu vermeiden. Die Zufuhr der Pasteurisierungseinheiten orientiert sich dabei an Referenzkurven und erfolgt im Normalbetrieb in einem quasi-stationären Bereich, da die Temperatur in weiten Teilen der Wärmeübertrager konstant gehalten wird.

DE 1 9738926 offenbart ein Verfahren zur Hochpasteurisierung von Milch, bei dem die Milch nach der Erhitzung, ohne definierte Heißhalte zeit, schockartig gekühlt wird.

Aufgrund neuerer Untersuchungen im Bestreben die Bierqualität zu erhöhen, wurde festgestellt, dass bestimmte im Bier enthaltene qualitätsmindernde Enzyme bei höheren Temperaturen als heute bei der Pasteurisation üblich, neutralisiert werden, wobei die thermische Einwirkzeit auf die Enzyme wahrscheinlich eine geringere Rolle spielt als das Erreichen eines bestimmten Temperaturniveaus.

Die sich daraus ableitende Aufgabenstellung ist somit die Entwicklung eines Pasteurisationsverfahrens, welches einerseits die in der Praxis bewährten PE-Grenzen (in der Regel zwischen 10 PE und 30 PE) nicht überschreitet, jedoch andererseits im thermischen Verlauf eine möglichst hohe Produkttemperatur erreicht.

Die Lösung dieser Aufgabe liefert ein erfindungsgemäßes Verfahren zur Pasteurisation von Getränken, insbesondere Bier, mit den kennzeichnenden Merkmalen des Hauptanspruchs.

Der apparative Aufbau der KZE-Anlage gemäß dem hier vorgestellten thermisch-instationären Verfahren unterscheidet sich im wesentlichen dadurch, daß kein Heißhalter verwendet wird. Die Anforderung nach einer möglichst hohen Temperatur und die Definition, daß die Pasteurisation oberhalb der Temperatur $\vartheta 2$ (z.B. 60°C) beginnt, hat zur Folge, daß der Temperaturverlauf innerhalb des Rekuperators auf Kühl- und Aufheizseite, sowie im Erhitzer im Temperaturbereich oberhalb $\vartheta 2$ nicht mehr zu vernachlässigen ist. Das Maximum der Temperatur wird dann erreicht, wenn dem Produkt durch den Aufheiz- und den Rückkühlprozess gerade so viele PE zugeführt werden, wie erwünscht sind. Die Temperaturänderungen sollten hierbei möglichst schnell vollzogen werden, damit die PE bei einer möglichst hohen Temperatur zugeführt werden können. Sollen die Temperaturen noch schneller geändert werden können, als es durch den rekuperativen Aufbau einer üblichen KZE-Anlage möglich ist, müßte fremdgekühlt werden und es müßten die Temperaturdifferenzen zwischen Heiz- und Produktstrom erhöht werden. (Hierbei sinkt allerdings der Wärmerückgewinn der Anlage und damit die Wirtschaftlichkeit)

Durch die Kenntnis der konstruktiven Gegebenheiten eines Wärmeübertragungsapparates und der Durchflüsse werden die Temperaturverläufe mathematisch ermittelt. Hierbei sollte vorzugsweise das Volumen zwischen den Wärmeübertragungsplatten minimiert und der k-Wert maximiert sein. Gleichzeitig sind vorzugsweise die Querströmungen - Bereich in dem die Strömung auf die Platten verteilt wird - und die Verrohrung (wenn das Produkt an dieser Stelle 60°C übersteigt) so klein wie möglich zu gestalten. Insbesondere sollte die Strecke zwischen Erhitzeraustritt und Rekuperatoreintritt auf der Kühlseite so kurz wie möglich gehalten werden, da hier die Maximaltemperatur vorherrscht. Je nach erwünschter Auslauftemperatur aus der KZE-Anlage ist ein Nachkühler oder ein Erwärmer einzusetzen.

Durch ein Berechnungsverfahren werden die PE-Werte unter Einbeziehung des Temperaturverlaufes in den einzelnen Sektionen bestimmt und addiert. Wird der gewünschte PE-Wert durch die eingestellten Regelungsparameter nicht erreicht, wird die Spitzentemperatur entsprechend erhöht oder gesenkt.

Die wesentliche Zielsetzung besteht im Rahmen des erfindungsgemäßen Verfahrens darin, eine hohe Spitzentemperatur des Produkts zu erreichen, bei möglichst weitgehender Einhaltung der PE-Grenzen.

Zentrale Einflussgrößen sind dabei das Volumen in der KZE-Anlage, der Volumenstrom des Produkts, der Temperaturverlauf zwischen Einlauf und Auslauf, und die Wärmeübertragungseigenschaften der KZE-Anlage.

Das erfindungsgemäße Verfahren zeichnet sich dadurch aus, daß kein Heißhalter verwendet wird und eine PE-Berechnung in der Aufheiz- und Abkühlphase vorgesehen ist.

Nachfolgend wird die vorliegende Erfindung anhand von Ausführungsbeispielen unter Bezugnahme auf die beiliegenden Zeichnungen näher beschrieben. Dabei zeigen

Fig. 1     den prinzipiellen Aufbau einer erfindungsgemäßen KZE-Anlage mit thermisch instationärer Pasteurisation;

Fig. 2     den prinzipiellen Temperaturverlauf bei einem erfindungsgemäßen Pasteurisierungsverfahren.

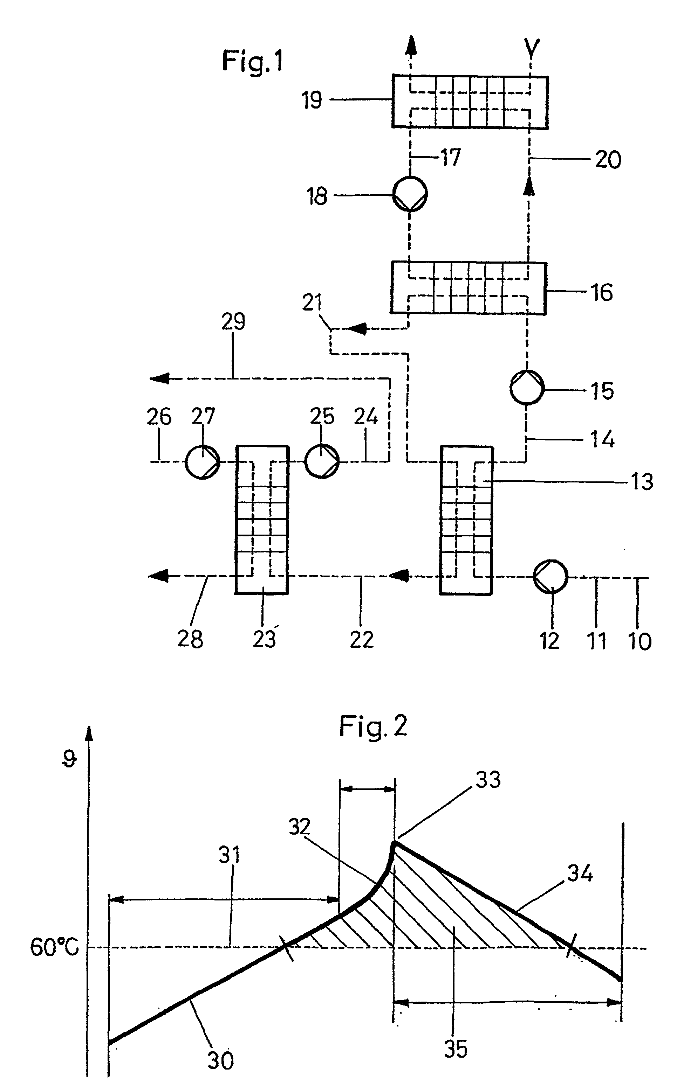

Zunächst wird auf Fig. 1 Bezug genommen. Das zu pasteurisierende Produkt, in diesem Fall Bier, gelangt bei dem Produkteinlauf 10 in die Anlage und wird über die Leitung 11 mittels der Pumpe 12 in den Rekuperator 13 gefördert. Dort erfolgt die Aufheizung des Produkts durch den abströmenden heißen Produktstrom. Das so aufgewärmte Produkt verläßt den Rekuperator 13 über die Leitung 14 und wird mittels der Pumpe 15 zum Erhitzer 16 gefördert. Ebenso wie im Rekuperator 13 fließt das Produkt im Erhitzer 16 im Gegenstrom gegen ein zur Erwärmung verwendetes Medium, in diesem Fall heißes Wasser. Das im Gegenstrom fließende heiße Wasser gelangt über die Leitung 17 aus dem Heizwasserbereiter 19 mittels der Pumpe 18 in den Erhitzer 16 und verläßt den Erhitzer über die Leitung 20.

Das Produkt verläßt den Erhitzer 16 über die Leitung 21 und hat beim Verlassen des Erhitzers in der Regel seine maximale Temperatur erreicht. Das Produkt strömt dann durch den Rekuperator 13 und strömt dabei im Gegenstrom zu dem frischen Produkt, welches aus der Leitung 11 in den Rekuperator 13 gelangt und sich dort aufwärmt.

Nach der Abkühlung verläßt das pasteurisierte Produkt den Rekuperator 13 über die Leitung 22 und fließt in einen Nachkühler 23, den es über die Leitung 24 gefördert von der Pumpe 25 verläßt. Auch in dem Nachkühler 23 läßt man in vorteilhafter Weise das Kühlmittel im Gegenstrom strömen.

Dabei gelangt das Kühlmittel an dem Kühlmitteleinlauf 26 gefördert über die Pumpe 27 in den Nachkühler 23, strömt dort im Gegenstrom gegen das sich abkühlende Produkt und verläßt den Nachkühler 23 über die Leitung 28. Grundsätzlich kann man den Nachkühler 23 auch als Erwärmer verwenden, wenn dies erforderlich ist und läßt dann ein Heizmedium anstelle des Kühlmittels über die Leitung 26 einlaufen und über die Leitung 28 auslaufen.

Das Produkt, welches sich im Nachkühler 23 abgekühlt hat, strömt dann über die Leitung 24 zum Produktauslauf (Bierauslauf) 29. Dort verläßt das pasteurisierte Produkt die Anlage.

Der prinzipielle Temperaturverlauf bei einem erfindungsgemäßen Pasteurisierungsverfahren ergibt sich aus der schematischen Darstellung gemäß Fig. 2. Diese zeigt ein Diagramm, bei dem die Temperatur $\vartheta$ gegenüber der Verweilzeit $t_V$ aufgetragen ist. In diesem Fall wurde die Pasteurisierungstemperatur mit 60°C gewählt und ist durch die gestrichelte Linie dargestellt. Man erkennt, daß im Rekuperator in einer Aufheizphase 30 die Erwärmung des zu pasteurisierenden Produkts erfolgt, wobei dieses in dieser Aufheizphase 30 über die Pasteurisierungstemperatur hinaus (gestrichelte Linie 31) erwärmt wird. Danach erfolgt die weitere Erwärmung in der zweiten Aufheizphase 32 im Erhitzer bis zur Spitzentemperatur. Das Temperaturmaximum ist mit 33 gekennzeichnet. Nach dem Erreichen der Spitzentemperatur 33 erfolgt die Abkühlung des Produkts im Rekuperator, wobei die Abkühlphase mit 34 gekennzeichnet ist. Aus der Darstellung ist ersichtlich, daß es keine Heißhalteperiode mit Konstanthaltung der Temperatur gibt, sondern vielmehr nach Erreichen des Temperaturmaximums 33 die Abkühlphase 34 beginnt. Das Produkt wird dann im Rekuperator bis unter die Pasteurisierungstemperatur (gestrichelte Linie 31) abgekühlt. Der Bereich, in dem dem Produkt Pasteurisierungseinheiten zugeführt werden ist die gesamte Fläche unterhalb der Kurve im Bereich der Aufheizphase 31, 32 und der Abkühlphase 34, welche oberhalb der Pasteurisierungstemperatur liegt. Dieser Bereich, der bei der Berechnung der Pasteurisierungseinheiten berücksichtigt wird, ist in dem Diagramm mit 35 gekennzeichnet und als Fläche durch Schraffierung kenntlich gemacht.

Nachfolgend wird ein Zahlenbeispiel für ein erfindungsgemäßes Pasteurisierungsverfahren, welches thermisch instationär erfolgt, einem Vergleichsbeispiel gegenübergestellt. Die Zahlen für das Vergleichsbeispiel nach dem Stand der Technik, bei dem thermisch stationär mit einem Heißhalter gearbeitet wird stehen in der unteren Hälfte der Tabelle in der linken Spalte und die entsprechenden Zahlen für das erfindungsgemäße Verfahren stehen rechts daneben.

| Gegenüberstellung der PE-Werte thermisch stationär/thermisch instationär | | | |
|---|---|---|---|
| | Einheit | Pasteuristationsverfahren | |
| | | Thermisch stationär | Thermisch/instationär |
| PE-Sollwert | [PE] | 22,5 | |
| Volumenstrom Produkt | [m³/h] | 40 | |
| Plattenzahl Rekuperator | [Stk] | 100 | |
| Plattenzahl Erhitzer | [Stk] | 35 | |
| Volumen je Spalt | [l] | 2,33 | |
| Fläche je Platte | [m²] | 0,661 | |
| Heißhaltetemperatur | [°C] | 80 | Kein Heißhalter |
| Maximaltemperatur | [°C] | 80 | 80 |
| Rekuperator Aufheizseite | [PE] | 0,2 | 0,2 |
| Erhitzer | [PE] | 16,4 | 16,4 |
| Heißhalter | [PE] | 22,5 | Kein Heißhalter |
| Rekuperator Abkühlseite | [PE] | 5,9 | 5,9 |
| Summe | [PE] | 45 | 22,5 |
| **Überpasteurisation** | **[PE]** | **22,5** | **0** |

Eine herkömmliche KZE-Anlage berücksichtigt die PE-Zufuhr lediglich im Heißhalter. Bei einem geforderten PE-Wert von 22,5 PE und Heißhaltetemperatur von 80 °C ist der Heißhalter für eine Heißhaltezeit von ca. 1,8 s auszuführen.

Die bei der Aufheizung und Abkühlung zugeführten PE werden hierbei vernachlässigt!

Die thermisch instationäre Pasteurisation berücksichtigt nur die in der Aufheizung und Abkühlung zugeführten PE und verzichtet auf einen Heißhalter. Bei dem o.g. Beispiel ergibt sich für den PE-Sollwert von 22,5 PE eine Maximaltemperatur von 80 °C. Darüber hinaus werden keine PE zugeführt. Der relative Fehler, den eine thermisch stationär arbeitende Anlage aufweist beträgt im dargestellten Beispiel also 100 %.

**Patentansprüche**

1. Verfahren zur Pasteurisation von Getränken, insbesondere von Bier durch thermische Behandlung, bei dem ein Volumenstrom des Produkts vor seiner Abfüllung über eine Pasteurisierungstemperatur hinaus erwärmt und anschließend wieder abgekühlt wird, wobei unmittelbar im Anschluss an eine Aufheizphase (30), die bis zum Erreichen eines Temperaturmaximums (33) andauert, die Abkühlphase (34) mit sinkenden Temperaturen des Produkts eingeleitet wird, **dadurch gekennzeichnet, dass** zunächst eine für die Pasteurisierung des spezifischen Produkts zuzuführende maximale Menge an Pasteurisierungseinheiten (PE) berechnet wird, wobei die Pasteurisierungseinheit definiert ist als

$$PE = t_h \times Faktor^{(\vartheta_h - \vartheta_2)},$$

worin $t_h$ die Heißhaltezeit ist,
der einzusetzende Faktor von der jeweiligen Bakteriengattung abhängt,
$\vartheta_h$ die Heißhaltetemperatur ist und
$\vartheta_2$ die Temperatur ist, oberhalb derer eine Pasteurisierung erfolgt,

und dass Temperaturverlauf und Länge der Aufheizphase (30), Temperaturverlauf und die Länge der Abkühlphase (34) sowie das Temperaturmaximum danach so gewählt werden, dass bei der Pasteurisierung die Menge der zuvor berechneten Pasteurisierungseinheiten den insgesamt in der Aufheizphase und in der Abkühlphase tatsächlich zugeführten Pasteurisierungseinheiten entspricht.

2. Verfahren zur Pasteurisation von Getränken, insbesondere Bier nach Anspruch 1, **dadurch gekennzeichnet, dass** die Aufheizphase (30), in dem Temperaturbereich, in dem eine Pasteurisierung stattfindet (oberhalb der Pasteurisierungstemperatur $\vartheta 2$) kürzer ist als die Abkühlphase (34) (oberhalb der Pasteurisierungstemperatur).

3. Verfahren zur Pasteurisation von Getränken, insbesondere Bier nach Anspruch 1 oder 2, **dadurch gekennzeichnet, dass** in der Aufheizphase (30) die Erwärmung des Produktstroms in einem Rekuperator durch Wärmeübertragung aus dem abfließenden Produktstrom erfolgt.

4. Verfahren zur Pasteurisation von Getränken, insbesondere Bier nach einem der Ansprüche 1 bis 3, **dadurch gekennzeichnet, dass** eine Fremdheizung durch ein Medium mit höherer Temperatur, insbesondere Warmwasser oder heißen Dampf vorgesehen ist.

5. Verfahren zur Pasteurisation von Getränken, insbesondere Bier nach einem der Ansprüche 1 bis 4, **dadurch gekennzeichnet, dass** im Anschluß an die Erwärmung in einem Rekuperator wenigstens in einem Teil der Aufheizphase (32) die Erwärmung in einem Erhitzer erfolgt.

6. Verfahren zur Pasteurisation von Getränken, insbesondere Bier nach einem der Ansprüche 1 bis 5, **dadurch gekennzeichnet, dass** wenigstens ein Teil der Abkühlung in der Kühlphase (34) in einem Rekuperator erfolgt, wobei der abfließende abzukühlende Bierstrom im Gegenstrom zu dem sich aufheizenden zufließenden Bierstrom fließt.

7. Verfahren zur Pasteurisation von Getränken, insbesondere Bier nach einem der Ansprüche 1 bis 6, **dadurch gekennzeichnet, dass** eine Kühlung des Produktstroms in einem Wärmeüberträger mittels eines Fremdmediums vorgesehen ist.

## Claims

1. Method for the pasteurisation of drinks, in particular beer by thermal treatment, in which a flow volume of the product is heated above a pasteurisation temperature and then cooled again before it is filled into its containers, in which method immediately after a heating phase (30) that lasts until a maximum temperature (33) has been reached, the cooling phase (34) in which the product's temperature decreases is commenced, **characterized in that** a maximum quantity of pasteurisation units (PU) to be supplied for the pasteurisation of the specific product is first computed, the pasteurisation unit being defined as

$$PU = t_h \times Factor^{(\vartheta_h - \vartheta_2)}$$

where $t_h$ is the heat holding time,
the factor to be inserted depends on the particular bacterial species,
$\vartheta_h$ is the heat holding temperature, and
$\vartheta_2$ is the temperature above which a pasteurisation is effected,
and **in that** the temperature variation and the length of the heating phase (30), the temperature variation and length of the cooling phase (34), and the maximum temperature are then chosen so that, during pasteurisation, the amount of pasteurisation units previously calculated corresponds to the total number of pasteurisation units actually supplied during the heating and cooling phases.

2. Method for the pasteurisation of drinks, in particular beer, according to Claim 1, **characterized in that** the heating phase (30) in the temperature range within which pasteurisation takes place (above the pasteurisation temperature $\vartheta_2$) is shorter than the cooling phase (34) (above the pasteurisation temperature).

3. Method for the pasteurisation of drinks, in particular beer, according to Claim 1 or 2, **characterized in that** in the heating phase (30) the product stream is heated in a recuperator by heat transfer from the outflowing product stream.

4.  Method for the pasteurisation of drinks, in particular beer, according to any of Claims 1 to 3, **characterized in that** additional heating by a medium with higher temperature, in particular hot water or steam, is provided.

5.  Method for the pasteurisation of drinks, in particular beer, according to any of Claims 1 to 4, **characterized in that** at the conclusion of the heating in a recuperator, heating in a heater takes place at least during a part of the heating phase (32).

6.  Method for the pasteurisation of drinks, in particular beer, according to any of Claims 1 to 5, **characterized in that** at least part of the cooling during the cooling phase (34) takes place in a recuperator, with the outflowing beer stream to be cooled flowing counter-current to the inflowing beer stream to be heated.

7.  Method for the pasteurisation of drinks, in particular beer, according to any of Claims 1 to 6, **characterized in that** the product stream is cooled in a heat exchanger by means of an outside medium.

**Revendications**

1.  Procédé de pasteurisation de boissons, en particulier de bière, par traitement thermique, dans lequel un courant volumique du produit est réchauffé au-delà d'une température de pasteurisation avant d'être versé et est ensuite à nouveau refroidi, la phase de refroidissement (34) étant amorcée avec des températures décroissantes du produit directement suite à une phase de chauffage (30) qui dure jusqu'à ce qu'un maximum de température (33) ait été atteint, **caractérisé en ce que** l'on calcule d'abord une quantité maximale d'unités de pasteurisation (PE) à introduire pour la pasteurisation du produit spécifique, l'unité de pasteurisation étant définie par

$$PE = t_h \text{ x facteur } (^{\theta_h - \theta_2}),$$

    où $t_h$ est le temps de maintien à chaud,
    le facteur à ajuster dépend du type de bactéries particulier,
    $\theta_h$ est la température de maintien à chaud et
    $\theta_2$ est la température au-dessus de laquelle a lieu une pasteurisation,
    et **en ce que** l'allure de la température et la longueur de la phase de chauffage (30), l'allure de la température et la longueur de la phase de refroidissement (34) ainsi que le maximum de température sont ensuite choisis de telle sorte que lors de la pasteurisation, la quantité des unités de pasteurisation calculées préalablement corresponde aux unités de pasteurisation effectivement introduites dans l'ensemble dans la phase de chauffage et dans la phase de refroidissement.

2.  Procédé de pasteurisation de boissons, en particulier de bière selon la revendication 1, **caractérisé en ce que** la phase de chauffage (30), dans la zone de température dans laquelle a lieu une pasteurisation (au-dessus de la température de pasteurisation $\theta_2$) est plus courte que la phase de refroidissement (34) (au-dessus de la température de pasteurisation).

3.  Procédé de pasteurisation de boissons, en particulier de bière, selon la revendication 1 ou 2, **caractérisé en ce que** dans la phase de chauffage (30), le réchauffement du courant de produit s'effectue dans un récupérateur par transfert thermique depuis le courant de produit sortant.

4.  Procédé de pasteurisation de boissons, en particulier de bière, selon l'une quelconque des revendications 1 à 3, **caractérisé en ce que** l'on prévoit un chauffage extérieur par un milieu à plus haute température, notamment de l'eau chaude ou de la vapeur chaude.

5.  Procédé de pasteurisation de boissons, en particulier de bière, selon l'une quelconque des revendications 1 à 4, **caractérisé en ce que** le réchauffement a lieu dans un dispositif de chauffage au moins dans une partie de la phase de chauffage (32), suite au réchauffement dans un récupérateur.

6.  Procédé de pasteurisation de boissons, en particulier de bière, selon l'une quelconque des revendications 1 à 5, **caractérisé en ce qu'**au moins une partie du refroidissement dans la phase de refroidissement (34) a lieu dans un récupérateur, le courant de bière sortant et devant être refroidi s'écoulant à contre-courant par rapport au courant de bière entrant à chauffer.

7. Procédé de pasteurisation de boissons, en particulier de bière, selon l'une quelconque des revendications 1 à 6, **caractérisé en ce que** l'on prévoit un refroidissement du courant de produit dans un échangeur de chaleur au moyen d'un milieu extérieur.

EP 1 146 116 B1

Fig.1

Fig. 2

9